# EUROPEAN PATENT SPECIFICATION

(11) **EP 0 879 217 B1**
(45) Date of publication and mention of the grant of the patent: **19.07.2000**
(21) Application number: 97902392.6
(22) Date of filing: 07.02.1997
(51) Int. Cl.: C05C 1/02, C05C 5/00

(54) **PROCESS FOR PRODUCTION OF FERTILIZER GRANULES CONTAINING AMMONIUM NITRATE, POTASSIUM AND MAGNESIUM AND A FERTILIZER PRODUCT**
VERFAHREN ZUR HERSTELLUNG VON AMMONIUMNITRAT-,KALIUM- UND MAGNESIUMHALTIGENDÜNGEMITTELKÖRNERN UND DÜNGEMITTELPRODUKT
PROCEDE DE PRODUCTION D'ENGRAIS SOUS FORME DE GRANULES CONTENANT DU NITRATE D'AMMONIUM, DU POTASSIUM ET DU MAGNESIUM ET UN PRODUIT FERTILISANT

(30) Priority: 09.02.1996 FI 960596
(43) Date of publication of application: 25.11.1998
(73) Proprietor: KEMIRA AGRO OY, 00180 Helsinki (FI)
(72) Inventor: HERO, Heikki, FIN-02200 Espoo (FI); POUKARI, Juhani, FIN-02430 Masala (FI); VENÄLÄINEN, Pentti, FIN-71800 Siilinjärvi (FI)
(74) Representative: Saijonmaa, Olli-Pekka
(86) International application number: FI9700078
(87) International publication number: WO9729061

(56) References cited:
- DE-C- 678 246
- FR-A- 862 728
- FR-A- 880 604
- DERWENT'S ABSTRACT, No. 91-301538/41, Week 9141; & SU,A,1 623 988 (KAZA UNIV), 30 January 1991.
- DERWENT'S ABSTRACT, No. 93-301456/38, Week 9338; & SU,A,1 763 436 (NW CORRESPONDENCE POLY), 23 Sept. 1992.

## Description

The invention relates to a process for the production of thermally stable fertilizer granules which withstand both static and dynamic loads and which contain a potassium- and magnesium-containing mica mineral, such as phlogopite and/or biotite, as well as potassium and magnesium derived partly in water-soluble form from this mineral by nitric acid leaching. Furthermore, the invention relates to fertilizer granules produced by the above process.

The conventional problem with currently used fertilizers is the breakage, swelling and disintegration of the fertilizer granules. The above problems have appeared in particular with fertilizer granules which have been prepared by conventional methods and which contain large amounts of nitrate, 60-98% by weight, and which may additionally contain also other nutrients, such as phosphorus in the form of phosphate or some inert substance.

In particular, fertilizer granules containing ammonium nitrate tend to swell if the temperature ranges around 32 °C. A temperature increase is possible, for example, during the storage of fertilizers. As a consequence of swelling, the sacks may become torn, whereupon the fertilizer may absorb moisture from the ambient air.

The swelling is due to a change occurring at 32 °C in the crystal form of ammonium nitrate. When the temperature rises above 32 °C, there will be a change from crystal form IV to crystal form III. If the temperature increased further to a level above 84 °C, there would occur a crystal form change III → II. The handling and storage temperature of finished fertilizer is within the range within which the change IV → III occurs.

A change in the crystal volume is also associated with the crystal form change. When the above-mentioned change IV → III occurs, the volume of the crystal increases by 3.6%. When we speak of swelling, the question is precisely of this volume change. In connection with outdoor storage, crystal form changes may occur several times, owing to repeated temperature increases and decreases, whereupon the granule structure of the granules may collapse.

When the product disintegrates, its susceptibility to explosion will increase and it becomes dust-emitting, and therefore the handling of the product during transport and storage, as well as during its being spread in the fields, will be problematic. In addition, the product often requires a long maturation period before being packaged.

Various attempts have been made to improve the technical properties, such as granule strength of and dust emissions from fertilizer granules. For example, from patent publication SU 1763436 it is known to add fine-ground biotite or phlogopite as such to molten calcium nitrate to increase the strength of the fertilizer granules being produced and, on the other hand, to increase the concentration of slowly dissolving plant nutrients in the fertilizers. This alternative has, for example, the disadvantage that the potassium present in the biotite or phlogopite is poorly soluble and is thus not in a form usable by plants.

The auxiliaries, such as Mg(NO₃)₂ or KNO₃ or Al₂(SO₄)₃, commonly used for inhibiting cake formation and/or for increasing the strength of the granules, have the disadvantages not only of their high hygroscopicity but also that the percentage by weight of these auxiliaries in the final product is considerably high and they are expensive as compared with NH₄NO₃. For this reason the production costs of the product increase and, on the other hand, its nutrient concentrations may decrease. The fertilizer granules obtained are, nevertheless, still rather soft, easily breakable and therefore also dust-emitting, and for example Mg(NO₃)₂ substantially increases the hygroscopicity of the fertilizer.

By the process according to the present invention it is possible advantageously to stabilize fertilizers containing nitrogen and possibly phosphorus, to inhibit swelling, and to strengthen the granule. The process according to the invention is especially suitable for the production of fertilizers which contain ammonium nitrate. The granules become spherical and, owing to the reduction of friction between granules, their distribution in the fields is improved. In addition, the volume weight and hardness of the product increase.

Both biotite and phlogopite, both of which are micas of the biotite group, contain poorly soluble or completely insoluble potassium up to 7-10% by weight, calculated as K₂O, and magnesium up to 24% by weight, calculated as MgO. However, it has not been known previously how to exploit economically the potassium and/or magnesium of these minerals as a source of soluble potassium and/or magnesium for fertilizers and at the same time as an improver of the technical properties of fertilizers.

An object of the present invention is a process for rendering the poorly soluble potassium and magnesium present in a mica mineral, such as biotite and phlogopite, into a readily soluble form, and at the same time for exploiting them as fertilizer raw materials.

A further object of the invention is a process for the production of fertilizer granules which withstand well transportation and storage, withstand high variations of temperature without disintegrating, and do not form clods or emit dust.

The process according to the invention is characterized in that
a) the mica is slurried into nitric acid
b) the obtained mixture of dissolved and insoluble material is neutralized by adding ammonia, and
c) other plant nutrients are possibly added and granulation is performed.

According to the present invention, for example 60-300 kg of biotite and/or phlogopite or any other mica which contains potassium and magnesium is slurried into 550-700 kg of a strong nitric acid, whereupon a portion of the potassium and magnesium present in the said minerals dissolves in exothermal reactions. The temperature of the reaction mixture, which could rise up to 80 °C, is maintained during the leaching within the range 25-55 °C. It is possible to add to the nitric acid, in addition to the said minerals and simultaneously with them, other minerals, such as apatite, conventionally used for the production of fertilizers.

In the next step the obtained reaction mixture, which is a mixture of a solution and insolubles, is neutralized by an addition of ammonia, either in one step directly to a pH value of 4.5-6.5, or in two steps, first to a pH value of 1.5-3.5 and in the second step to a pH value of 4.5-6.5. The neutralization may be carried out either under normal pressure or under elevated pressure. During the neutralization the temperature of the mixture, which without cooling may rise up to 180 °C, is maintained, by cooling, within a range of 110-150 °C, preferably at approx. 130 °C. The pH adjustment is carried out preferably in two steps, since in such a case ammonia will not escape from the reaction mixture as easily as it does when the neutralization is carried out in one step.

Before granulation, any other desired plant nutrients are added, for example sulfur in the form of sulfuric acid, phosphorus in the form of phosphoric acid, and/or other conventional nutrient salts, either to the above-mentioned neutralized mixture or directly into the granulator.

The neutralized mixture, to which possibly also other plant nutrients have been added and which contains water 4-25% by weight, preferably 6-12% by weight, is pumped or caused to flow into a conventional granulator, such as a granulation drum, spherodizer, or a blunger granulator, and is granulated. Matter recycled in a conventional manner in granulation is added into the granulator in a suitable amount. After granulation, the granules are dried and screened, undersized and oversized granules are separated, the product granules are cooled and, when so desired, treated in a conventional manner with coating substances. The oversized granules are crushed and recycled into the process together with the undersized granules and recovered dust as the above-mentioned recycled component.

In order to ensure the quality, it has been necessary to cool to a temperature below 35 °C the granulated product produced by prior methods, but the temperature of a product granulated by the method according to the invention may be up to 55 °C. Especially during warm seasons the production capacity is thus increased.

Conventional tests were performed on the finished granular fertilizer products in order to ascertain their quality; the results are shown in Table 1. The granule strength, dust, thermal stability (=swelling), volume weight, shattering, and abrasion of the finished product were determined. The same tests were also performed on two CAN 27 products available on the market; the results are shown in Table 1, i.e. reference 1 and reference 2.

### Tests performed

Granule strength: In granule strength determinations at minimum 20, usually 30 or 50, granules, granule size 2.8-3.15 mm, are pressed against a smooth surface until breakage. The required compressive force (N) is measured.

Dust: A sample of predetermined weight is suspended by means of an air stream for 2 minutes. The dust which has traveled onto a filter paper is weighed, and the result is indicated in mg of dust per kg of sample.

| Dust mg/kg | Grade |
|---|---|
| < 200 | very little dust |
| 200-500 | little dust |
| 500-1000 | much dust |
| 1000-2000 | very much dust |

Volume weight: TVA (Tennessee Valley Authority) test. The volume weights of the fertilizers range from 0.70 to 1.20 kg/dm³.

Shattering: A screened fertilizer granule sample, granule size 2.0-3.15 mm, is blasted against a wall with an air pressure of 600 kPa. The sample which has been blasted is screened with a 2 mm mesh screen, and the portion remaining on the screen is weighed. The result is indicated as a percentage of unshattered granules of the total weight of the sample.

Abrasion: The test is carried out in an abrasion mill by rotating a sample for a predetermined period together with 200 steel balls. The abraded portion is separated by using a 1.00 mm mesh screen. The result is indicated as a percentage of the abraded portion of the total sample weight.

Furthermore, the thermal stability of the granular product according to the invention is good as compared with the products currently on the market. The swelling of the product has been determined by the method according to EU Directive 116/76. (The temperature is varied between 20 and 50 °C).

In the test according to EU Directive 87/94 measuring susceptibility to explosion, the product according to the invention proved to be completely safe, i.e. non-explosive. The product thus withstands both storage even in hot conditions and rough treatment during storage and transport.

Granules produced by the process according to the invention are highly spherical and smooth-surfaced, their volume weight is approx. 5-15% by weight higher than that of conventionally produced corresponding granules. The granule strength of the granules is up to double that of granules produced by prior techniques, the granule strength of the latter being approx. 40 N and that of granules according to the present invention, produced on an industrial scale, being approx. 60-100 N, measured on granules having a diameter of approx. 3 mm.

Furthermore, granules according to the present invention do not form cakes even when their moisture content is relatively high. Conventional fertilizer granules may contain moisture approx. 0.2-0.4% by weight without caking, whereas granules according to the present invention may contain moisture up to 1.5% by weight without caking. In addition, a product according to the invention absorbs considerably less water from the air than does a conventional product.

Fertilizer granules according to the invention run through a fertilizer spreading machine 10-25% better than does a commercial product which served as a reference, and the granules withstand rough treatment during the spreading stage without breakage. For the above reasons, a higher fertilizer spreading efficiency per time unit is achieved with a fertilizer according to the invention than with the commercial reference product.

The invention is described in greater detail with the following embodiment examples:

### Example 1

| Production of a phlogopite-containing fertilizer (A) | |
|---|---|
| HNO₃ (100%) | 600 kg |
| NH₃ | 160 kg |
| phlogopite | 110 kg |
| calcite | 80 kg |
| H₂SO₄ | 30 kg |

110 kg of phlogopite was slurried into an amount of a strong nitric acid, concentration 40-64% by weight and having an acid content of 600 kg calculated as 100% HNO₃, while stirring continuously and cooling when necessary. The stirring was continued for 10-15 min, during which time the temperature of the mixture was maintained at approx. 35-55 °C.

In the next step the obtained mixture, which now also contained dissolved potassium and magnesium, was neutralized by adding 160 kg of a gaseous ammonia, i.e. until the pH of the mixture reached a value of approx. 5. To the obtained neutralized mixture, 80 kg of calcite and 30 kg of a strong sulfuric acid were added.

Finally the mix was granulated in a conventional manner, the obtained granules were dried and screened, undersized granules and crushed oversized granules were recycled into the process. The product granules, having a granule size of 2.0-3.15 mm, were cooled to a temperature of 30-50 °C.

### Example 2

| Production of a phlogopite-containing fertilizer (B) | |
|---|---|
| HNO₃ (100%) | 590 kg |
| NH₃ | 160 kg |
| phlogopite | 120 kg |
| CaSO₄*2H₂O | 100 kg |

120 kg of phlogopite was slurried into a strong nitric acid, concentration 58-63% by weight and with a content of 590 kg of 100% HNO₃, in accordance with Example 1. The obtained mixture was neutralized by adding 160 kg of a gaseous ammonia (pH approx. 5.5). 100 kg of calcium sulfate was added to the neutralized mixture, and fertilizer granules were prepared as in Example 1.

### Example 3

| Production of a biotite-containing fertilizer (C) | |
|---|---|
| HNO₃ (100%) | 590 kg |
| NH₃ | 160 kg |
| biotite | 120 kg |
| gypsum | 100 kg |

120 kg of biotite was slurried into a strong nitric acid, concentration 58-63% by weight and with a content of 590 kg of 100% HNO₃, while stirring continuously and cooling when necessary, in accordance with Example 1. However, the neutralization was carried out in two steps by adding in total 160 kg of a gaseous ammonia. In the first step the pH of the mixture was adjusted to a value of 1.5-3.5 and in the second step to a value of 4.5-5.5. Finally 100 kg of gypsum was added to the neutralized mixture. Fertilizer granules were prepared as in Example 1.

### Example 4

| Production of a phlogopite-containing fertilizer (D) | |
|---|---|
| HNO₃ (100%) | 600 kg |
| NH₃ | 134 kg |
| phlogopite | 300 kg |

300 kg of phlogopite was slurried into a nitric acid, concentration 40% by weight and with a content of 600 kg of 100% HNO₃, while stirring continuously and cooling when necessary. Stirring was continued for approx. 30 min, during which time the temperature of the mixture was approx. 30 °C.

In the next step the obtained mixture was neutralized in two steps by adding a total of 134 kg of a gaseous ammonia. In the first step the pH was 2.4 and the final pH was approx. 6.5.

Finally the mix was granulated in a conventional manner, the obtained granules were dried and screened, undersized granules and crushed oversized granules were recycled into the process. The product granules, having a granule size of 2.0-3.15 mm, were cooled to a temperature of 30-50 °C.

The test results of the finished fertilizer granule products produced according to Examples 1-4 are shown in Table 1.

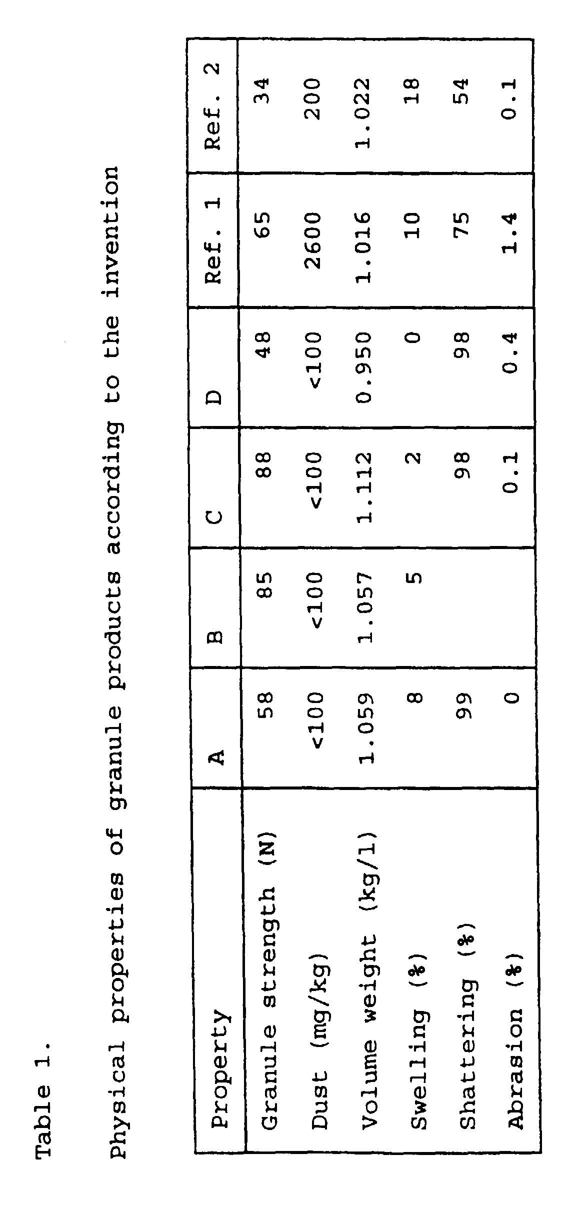

## Claims

1. A process for the production of thermally stable fertilizer granules which withstand both static and dynamic loads and contain a potassium- and magnesium-containing mica mineral, **characterized** in that
a) the mica is slurried into nitric acid to form a mixture of dissolved and insoluble material
b) the obtained mixture is neutralized by adding ammonia,
c) other plant nutrients are possibly added, and
d) the mixture is turned into granules with a content of potassium and magnesium in a readily soluble form.

2. A process according to Claim 1, **characterized** in that the mica is biotite and/or phlogopite.

3. A process according to Claim 1 or 2, **characterized** in that the slurrying of mica into nitric acid is carried out at a temperature of 25-55 °C.

4. A process according to any of Claims 1-3, **characterized** in that the neutralization with ammonia is carried out either in one step directly to a pH value of 4.5-6.5 or in two steps, first to a pH value of 1.5-3.5 and in the second step to a pH value of 4.5-6.5.

5. A process according to any of Claims 1-4, **characterized** in that during the neutralization the temperature is maintained at approx. 110-150 °C, preferably at 130 °C.

6. Fertilizer granules produced by a process according to any of Claims 1-5.

## Patentansprüche

1. Verfahren zur Herstellung von thermisch stabilen Düngemittelkörnern, die sowohl statischen als auch dynamischen Belastungen widerstehen und ein Kalium- und Magnesiumenthaltendes Glimmer-Mineral enthalten, **dadurch gekennzeichnet,** daß
a) der Glimmer in Salpetersäure aufgeschlemmt wird, um eine Mischung aus gelöstem und unlöslichem Material zu bilden,
b) die erhaltene Mischung durch Zugabe von Ammoniak neutralisiert wird,
c) andere Pflanzennährstoffe gegebenenfalls zugegeben werden, und
d) die Mischung in Körner mit einem Anteil von Kalium und Magnesium in einer leicht löslichen Form überführt wird.

2. Verfahren nach Anspruch 1, **dadurch gekennzeichnet**, daß der Glimmer Biotit und/oder Phlogopit ist.

3. Verfahren nach Anspruch 1 oder 2, **dadurch gekennzeichnet,** daß das Aufschlemmen des Glimmers in Salpetersäure bei einer Temperatur von 25-55°C durchgeführt wird.

4. Verfahren nach einem der Ansprüche 1 - 3, **dadurch gekennzeichnet,** daß die Neutralisierung mit Ammoniak entweder in einem Schritt direkt auf einen pH-Wert von 4,5-6,5 oder in zwei Schritten zunächst auf einen pH-Wert von 1,5-3,5 und in einem zweiten Schritt auf einen pH-Wert von 4,5-6,5 durchgeführt wird.

5. Verfahren nach einem der Ansprüche 1 - 4, **dadurch gekennzeichnet,** daß während der Neutralisierung die Temperatur bei etwa 110-150°C gehalten wird, vorzugsweise bei 130°C.

6. Düngemittelkörner, hergestellt durch ein Verfahren nach einem der Ansprüche 1 - 5.

## Revendications

1. Procédé pour la production de granules d'engrais thermiquement stables qui résistent à la fois à des charges statiques et à des charges dynamiques et contiennent un minéral de mica contenant du potassium et du magnésium, caractérisé en ce que :
a) le mica est mis en suspension dans de l'acide nitrique pour former un mélange de matériaux dissous et insolubles,
b) le mélange obtenu est neutralisé par ajout d'ammoniac,
c) d'autres éléments nutritifs pour plante sont éventuellement ajoutés, et
d) le mélange est façonné en granules avec une teneur en potassium et magnésium sous une forme aisément soluble.

2. Procédé selon la revendication 1, caractérisé en ce que le mica est de la biotite et/ou de la phlogopite.

3. Procédé selon la revendication 1 ou 2, caractérisé en ce que la mise en suspension du mica dans l'acide nitrique est réalisée à une température de 25-55°C.

4. Procédé selon l'une quelconque des revendications 1 à 3, caractérisé en ce que la neutralisation avec l'ammoniac est réalisée soit en une étape directement jusqu'à une valeur de pH de 4,5-6,5 ou en deux étapes, tout d'abord jusqu'à une valeur de pH de 1,5-3,5 et en deuxième étape jusqu'à une valeur de pH de 4,5-6,5.

5. Procédé selon l'une quelconque des revendications 1 à 4, caractérisé en ce que pendant la neutralisation la température est maintenue à approximativement 110-150°C, préférentiellement à 130°C.

6. Granules d'engrais produits par un procédé selon l'une quelconque des revendications 1 à 5.
